# EUROPÄISCHE PATENTSCHRIFT

(11) **EP 0 497 273 B1**
(45) Veröffentlichungstag und Bekanntmachung des Hinweises auf die Patenterteilung: **15.11.1995**
(21) Anmeldenummer: 92101349.6
(22) Anmeldetag: 28.01.1992
(51) Int. Cl.: B65D 5/48, A47F 5/11, B65D 6/22, B65D 6/16, B65D 77/02

(54) **Verpackungsbehälter zur Aufnahme einer Mehrzahl von Gegenständen**
Packaging container for a number of objects
Récipient d'emballage destiné à recevoir plusieurs objets

(30) Priorität: 29.01.1991 DE 4102569
(43) Veröffentlichungstag der Anmeldung: 05.08.1992
(73) Patentinhaber: Kraft Jacobs Suchard SA, CH-8008 Zürich (CH)
(72) Erfinder: Maier, Hans, W-7863 Zell in Wiesenthal (DE)
(74) Vertreter: Möller, Friedrich, Dipl.-Ing.

(56) Entgegenhaltungen:
- DE-A- 1 511 144
- US-A- 1 802 123
- US-A- 1 802 123
- US-A- 4 477 016
- AUSZüGE AUS DEN GEBRAUCHS- MUSTERN, 25. Jahrgang, Heft 43, 27. Oktober 1988,
- WILA-Verlag-MUnchen, Seiten 2271,2272

## Beschreibung

Die Erfindung betrifft einen Verpackungsbehälter zur Aufnahme einer Mehrzahl von Gegenständen, insbesondere Schokoladentafeln, gemäß dem Oberbegriff des Anspruchs 1.

Verpackungsbehälter der hier angesprochenen Art werden im Fachjargon als "Shops" bezeichnet. Sie dienen als Transport- und Präsentationsmittel von darin in mehreren Stapeln angeordneten Gegenständen, und zwar insbesondere verpackten Süßwaren, wie beispielsweise Schokoladentafeln. Diese Waren werden also in den Verpackungsbehältern zum Händler gebracht und aus den Verpackungsbehältern heraus verkauft.

Das DE-U 88 05 701 offenbart einen Verpackungsbehälter zur Aufnahme von Schokoladentafeln. Der Verpackungsbehälter besteht aus einem Sockel und einem mit dem Sockel lösbar verbundenen Stapelaufbau. Der dort gezeigte Verpackungsbehälter weist den Nachteil auf, daß der Stapelaufbau zur Aufnahme der Schokoladentafeln als starres Gebilde und damit nicht zusammenfaltbar ausgebildet ist. Demzufolge ist der Verpackungsbehälter nur mit großem Aufwand wiederverwendbar.

US-A-1 802 123 zeigt einen Display-Karton zur Aufnahme und Präsentation von Handelswaren, so z.B. Konfekt. Der Display-Karton besteht aus einem Sockel und einem Stapelaufbau, wobei der Stapelaufbau zusammenfaltbar ausgebildet ist. Aufgrund seiner Konstruktion eignet sich der dort gezeigte Display-Karton jedoch nur zur Aufnahme kleiner Handelswaren und nicht zur Aufnahme einer Vielzahl von Schokoladentafeln.

Hiervon ausgehend liegt der Erfindung die Aufgabe zugrunde, einen Verpackungsbehälter für eine Mehrzahl von Schokoladentafeln zu schaffen, der in einfacher Weise wiederverwendbar ist.

Zur Lösung dieser Aufgabe weist der Verpackungsbehälter die Merkmale des Anspruchs 1 auf. Die erfindungsgemäße Ausgestaltung des Verpackungsbehälters weist mehrere Vorteile auf. Zum einen ist der Verpackungsbehälter zusammenfaltbar und damit platzsparend zurücktransportierbar ausgebildet. Der Verpakkungsbehälter ist dadurch wiederverwendbar. Die Säule stabilisiert den Stapelaufbau und erleichtert das Verschwenken der zum Teil verschwenkbar mit der Säule verbundenen Trennwände zum Zusammenlegen und/oder Zusammenfalten des Stapelaufbaus. Ebenso wird das Aufbauen des Stapelaufbaus durch die Säule vereinfacht.

Vorzugsweise ist die Säule aus zwei nebeneinanderliegenden Teilsäulen gebildet. Diese sind so miteinander verbunden, daß die beiden Teilsäulen ausgehend von ihren zueinandergerichteten Seiten zum Zusammenfalten des Stapelaufbaus auseinanderschwenkbar sind. Dabei werden gleichzeitig die beiden Teilsäulen platzsparend zusammengelegt, also von einer dreidimensionalen in eine flächige Gestalt überführt.

An zwei in einer Ebene nebeneinanderliegenden Seiten sind die Teilsäulen durch ein zwei Trennwände bildendes Teil des Stapelaufbaus miteinander verbunden. Dieses Teil des Stapelaufbaus verfügt außerdem über eine eine Mittelscharnierachse bildende Mittelfaltlinie, die zwischen den nebeneinanderliegenden Seitenflächen der miteinander verbundenen Teilsäulen liegt. Durch diese Mittelscharnierachse ist der zusammengefaltete bzw. -gelegte Stapelaufbau mittig (etwa V-förmig) zusammenfaltbar. Dadurch läßt sich die Grundfläche des zusammengelegten bzw. -gefalteten Stapelaufbaus halbieren.

Zweckmäßigerweise erfolgt die Verbindung des auseinandergeklappten bzw. aufgerichteten Stapelaufbaus mit dem Sockel durch mindestens eine Steckverbindung. Diese wird vorzugsweise gebildet aus korrespondierend zum Grundriß des Stapelaufbaus ausgebildete Vertiefungen. Auf diese Weise läßt sich der Stapelaufbau mit unteren Randabschnitten einfach und zuverlässig durch Formschluß in den Sockel stecken.

Im Sockel sind Auflager für die an den Trennwänden des Stapelaufbaus hochzustapelnden Gegenstände derart angeordnet, daß sie zur mittigen Säule hin geneigt sind. Dadurch werden die aufeinandergestapelten Gegenstände sicher im Verpackungsbehälter gehalten, weil durch die Neigung der Auflager die Gegenstände gegen die Trennwände des Stapelaufbaus bzw. die Säule gedrückt werden. Selbst höhere Stapel übereinanderliegender Gegenstände können dadurch nicht nach außen wegfallen.

Größere Auflager sind in mehrere Auflagerteilflächen unterteilt, die vorzugsweise in der Grundfläche einem Stapel der übereinander anzuordnenden Gegenstände entsprechen. Dadurch ergibt sich zum einen eine Verschuppung der Gegenstände einzelner nebeneinanderliegender Stapel zur Erhöhung der Stabilität der Stapel, während zum anderen aufgrund der geneigten Ausbildung der Teilauflagerflächen unter den daraus gebildeten Auflagern ein nur geringfügiger ungenutzter Hohlraum entsteht.

Gemäß einer bevorzugten Ausführungsform der Erfindung ist der Sockel aus einem Außenteil und wenigstens einem Innenteil gebildet. Ein solcher Sockel ist besonders leicht herstellbar, weil das separate Innenteil leicht mit den geneigten Auflagern bzw. Teilauflagerflächen für die im Verpackungsbehälter zu stapelnden Gegenstände zu versehen ist und die Vertiefungen zum Einstecken des ausgefalteten Stapelaufbaus durch einfache längs- und quergerichtete Schlitze sich im Innenteil bilden lassen. Das Innenteil kann sowohl ein- als auch mehrstückig gebildet sein. Bei mehrstückigen Innenteilen erstrecken sich die einzelnen Stücke derselben auf solche Bereiche des Sockels, die entweder zwischen zwei parallelen Trennwänden oder zwei rechtwinklig zueinander verlaufenden Trennwänden (in Eckbereichen des Verpackungsbehälters) sich befinden.

Ein weiteres wesentliches Merkmal der Erfindung liegt darin, daß der gesamte Verpackungsbehälter aus einem eine Mehrfachverwendung ermöglichenden haltbaren Material gebildet ist. Vorzugsweise sind sowohl der Sockel als auch der Stapelaufbau aus Kunststoff, vorzugsweise thermoplastischem Kunststoff, gebildet. Durch diese Materialauswahl ist der erfindungsgemäße Verpackungsbehälter besonders widerstandsfähig und somit nahezu unbegrenzt wiederverwendbar. Darüber hinaus läßt sich der erfindungsgemäße Verpackungsbehälter aus Kunststoff besonders einfach durch Tiefziehen, Spritzgießen und/oder Ausschneiden aus Halbzeugplatten herstellen.

Ein bevorzugtes Ausführungsbeispiel des erfindungsgemäßen Verpackungsbehälters wird nachfolgend anhand der Zeichnung näher erläutert. In dieser zeigen:
- Fig. 1: eine perspektivische Darstellung eines auf einer Palette angeordneten Verpackungsbehälters im aufgebauten, aber unbefüllten Zustand,

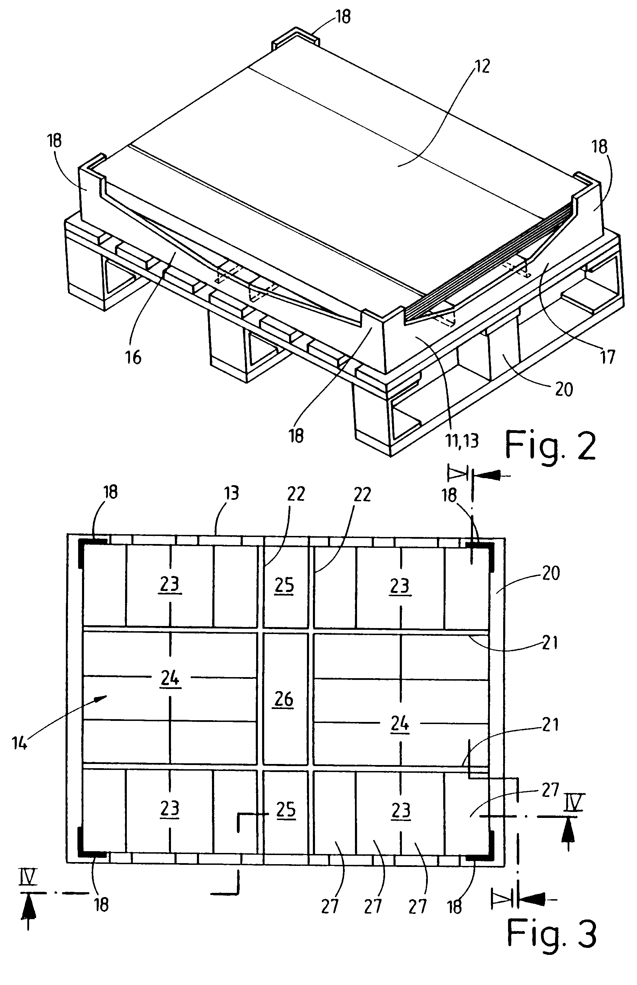

- Fig. 2: den Verpackungsbehälter gemäß der Fig. 1 im auseinandergebauten Zustand, nämlich mit zusammengelegtem Stapelaufbau,
- Fig. 3: eine Draufsicht auf einen Sockel des Verpackungsbehälters,
- Fig. 4: einen Schnitt IV-IV durch den Sockel gemäß der Fig. 3,
- Fig. 5: einen Schnitt V-V durch den Sockel gemäß der Fig. 3,
- Fig. 6: einen Stapelaufbau des Verpackungsbehälters in teilweise zusammengefaltetem Zustand und perspektivischer Darstellung, und
- Fig. 7: eine Draufsicht auf den teilweise zusammengelegten Stapelaufbau in vergrößertem Maßstab.

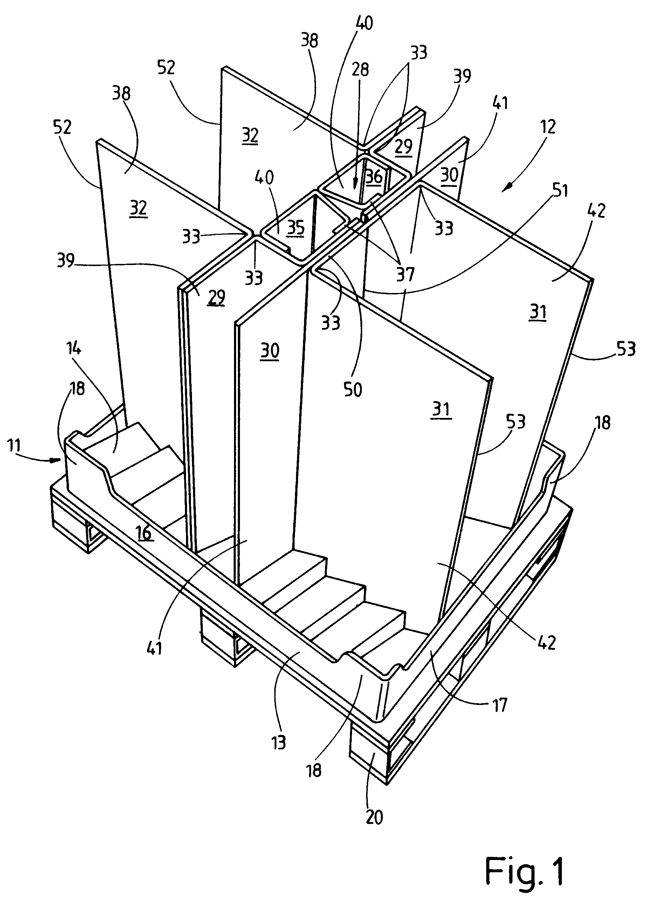

Die Erfindung betrifft einen Verpackungsbehälter, mit dem als "Mehrwegshop" Schokoladentafeln 10 in den Handel gebracht und anschließend abverkauft werden. Der Verpackungsbehälter ist so ausgebildet, daß in diesem mehrere Stapel aus einer Vielzahl übereinanderliegender Schokoladentafeln 10 Aufnahme finden. Die Außenseiten des Verpackungsbehälters sind offen, wodurch die darin abgepackten Schokoladentafeln 10 von außen her leicht zugänglich sind (Fig. 1).

Gebildet ist der Verpackungsbehälter aus einem Sockel 11 und einem lösbar damit verbundenen Stapelaufbau 12. Der Stapelaufbau 12 ist zusammenlegbar.

Der Sockel 11 ist beim hier gezeigten Verpackungsbehälter zweiteilig ausgebildet. Er setzt sich zusammen aus einem Außenteil 13 und einem Innenteil 14.

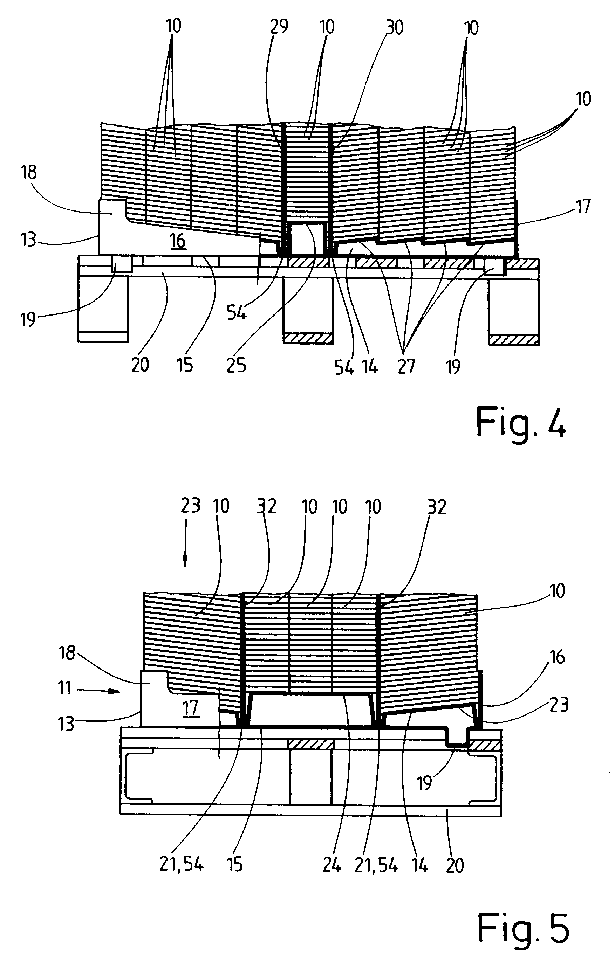

Das Außenteil 13 des Sockels 11 verfügt über die Gestalt eines niedrigbordigen, oben offenen Kastens. Demzufolge verfügt das Außenteil 13 über einen geschlossenen Boden 15 mit einer hier rechteckförmigen Grundfläche und an die Ränder des Bodens 15 anschließende (niedrige) Seitenwände 16 und Querwände 17. Diese sind senkrecht zum Boden 15 gerichtet und umgeben diesen vollständig. In den Eckbereichen sind die Seitenwände 16 und Querwände 17 nach oben erweitert zur Bildung von Stapelecken 18 (Fig. 1). Unter dem Boden 15 befinden sich Vorsprünge 19, die korrespondierend zu den Stapelecken 18 ausgebildet sind, und zwar hier als L-förmige Rippen. Die Rippen sind gegenüber dem Rand des Bodens 15 um das Maß der Wanddicke der Stapelecken 18 zurückversetzt (Fig. 4 und 5). Auf diese Weise lassen sich mehrere Sockel 11 übereinanderstapeln, wobei zwischen den Vorsprüngen 19 einerseits und den Stapelecken 18 andererseits eine Arretierung der übereinandergestapelten Sockel 11 gegen eine quergerichtete Relativverschiebung gewährleistet ist. Darüber hinaus dienen die Vorsprünge 19 unter dem Boden 15 jedes Außenteils 13 dazu, den Verpackungsbehälter mit dem Sockel 11 auf einer genormten Palette 20 (Fig. 1) gegen Verrutschen zu sichern. Dazu greifen die Vorsprünge 19 in Vertiefungen auf der Oberseite der Palette 20.

Das Innenteil 14 ist nach Art eines Einsatzes ausgebildet, der im Außenteil 13 Aufnahme findet und hierin formschlüssig zwischen den Seitenwänden 16 und Querwänden 17 gehalten ist. In dem hier einteilig ausgebildeten Innenteil 14 sind von einer Seite zur anderen durchgehende Nuten angeordnet, und zwar zwei parallele Längsnuten 21 und zwei parallele Quernuten 22 (Fig. 3). Diese unterteilen die Grundfläche des Innenteils 14 in insgesamt neun Felder 23 bis 26. Im Bodenbereich sind die Längsnuten 21 und Quernuten 22 geschlossen durch Stege 54. Durch diese sind die Felder 23 bis 26 des Innenteils 14 miteinander einstückig verbunden. Die Felder 23 bis 25 bilden Auflagerflächen für einen oder mehrere Stapel von Schokoladentafeln 10. Im gezeigten Ausführungsbeispiel dienen die vier gleichermaßen ausgebildeten eckseitigen Felder 23 zur Aufnahme von jeweils vier Stapeln mit an ihren Längsseiten aneinanderliegenden Schokoladentafeln 10. Zwei Felder 24 dienen zur Aufnahme von jeweils sechs neben- und hintereinanderliegenden Stapeln. Zwei kleine Felder 25 sind für jeweils einen Stapel vorgesehen. Ein von den äußeren Feldern 23 bis 25 eingeschlossenes mittiges Feld 26 bleibt frei, ist also unbepackt, weil es durch die ringsherum angeordneten Felder 23, 24, 25 keinen von außen erfolgenden Zugang zu den Schokoladentafeln 10 ermöglicht (Fig. 3).

Die zur Aufnahme der Stapel übereinanderliegender Schokoladentafeln 10 dienenden Auflager der Felder 23 bis 25 des Innenteils 14 verlaufen geneigt zum Boden 15 des Sockels 11. Diese Neigung ist derart gewählt, daß sie zum ebenen Boden des mittleren Feldes 26 hin verläuft. Dadurch liegen die Schokoladentafeln 10 zum mittleren Feld 26 hin leicht abwärts geneigt im Verpackungsbehälter, wodurch verhindert wird, daß die Stapel übereinanderliegender Schokoladentafeln 10 sich zu den offenen Außenseiten des Verpackungsbehälters verlagern und dadurch umfallen können. Die Auflager der Felder 24 verfügen über eine durchgehende Ebene, die zum mittleren Feld 26 geneigt ist. Demgegenüber sind die Auflager der eckseitigen Felder 23 schuppenartig ausgebildet, nämlich aus vier aufeinanderfolgenden Teilauflagern 27 für jeweils einen Stapel übereinanderliegender Schokoladentafeln 10 ausgebildet. Jedes Teilauflager 27 ist zum Feld 25 hin abwärtsgerichtet geneigt. Im Querschnitt sind die Felder 23 daher sägezahnförmig ausgebildet (Fig. 1 und 4). Weiterhin sind die Teilflächen durchgehend zu den Feldern 24 hin abfallend geneigt. Die Teilauflager 27 sind dadurch insgesamt zur jeweiligen Ecke des mittleren Feldes 26 ausgerichtet, wodurch auch in den eckseitigen Feldern 23 eine stabile Aufnahme der Stapel übereinanderliegender Schokoladentafeln 10 gewährleistet ist.

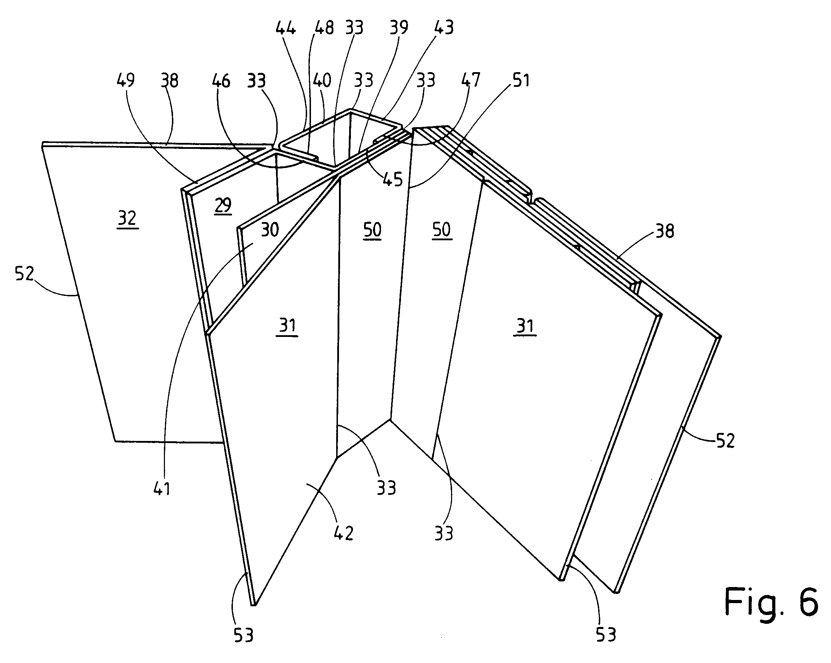

Der Stapelaufbau 12 ist nicht nur lösbar mit dem Sockel 11 verbunden; vielmehr läßt er sich nach dem Abnehmen vom Sockel 11 auch zusammenlegen bzw. zusammenfalten. Dazu verfügt der Stapelaufbau 12 über eine mittlere Säule 28, deren Grundfläche korrespondierend zur Grundfläche des Feldes 26 ausgebildet ist. Jede Seite der mittleren Säule 28 ist an gegenüberliegenden Enden verlängert durch jeweils eine Trennwand 29, 30, 31 bzw. 32. Insgesamt ist die mittlere Säule 28 mit vier Paaren von Trennwänden 29, 30, 31 bzw. 32 verbunden. Erfindungsgemäß sind die Trennwände 29, 31, 32 gelenkig, nämlich mittels aufrechter Scharnierachsen 33 an die mittlere Säule 28 angelenkt. Die beiden Trennwände 30 hingegen sind starr mit der mittleren Säule 28 verbunden. Diese bilden zusammen mit der zwischen ihnen liegenden Seite der mittleren Säule 28 eine Faltfläche 34, gegen die die schwenkbar an der mittleren Säule 28 angelenkten Trennwände 29, 31 und 32 zum Zusammenlegen bzw. Zusammenfalten des Stapelaufbaus 12 bewegbar sind (Fig. 1 und 6).

Die Längsnuten 21 und Quernuten 22 im Innenteil 14 sind derart bemessen, daß sie in ihrer Breite und Tiefe korrespondierend zu der Wanddicke der Trennwände 29 bis 32 sind, wodurch der ausgefaltete Stapelaufbau 12 von oben in die Längsnuten 21 und Quernuten 22 des Innenteils 14 einsteckbar ist.

Ein wesentlicher Aspekt der Erfindung besteht darin, daß die mittlere Säule 28 mittig geteilt ist. Zu diesem Zweck setzt sich die mittlere Säule 28 aus zwei gleich großen, hohlen Teilsäulen 35 und 36 zusammen. An zwei zueinandergerichteten, aufrechten Ecken 37, also eine Ecke 37 der ersten Teilsäule 35 und eine zweite danebenliegende Ecke 37 der zweiten Teilsäule 36, sind die Teilsäulen 35 und 36 miteinander verbunden (Fig. 1 und 6).

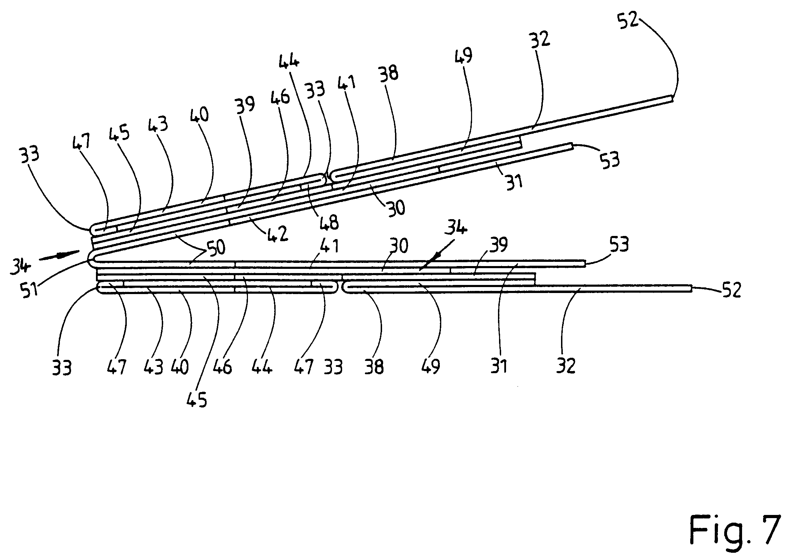

Der hier gezeigte Stapelaufbau 12 ist gebildet aus insgesamt neun fest miteinander verbundenen Zuschnitten. Acht Zuschnitte werden aus vier Paaren verschiedenartiger Zuschnitte 38, 39, 40, 41 gebildet, während ein fünfter Zuschnitt 42 nur einfach vorhanden ist. Die Gestalt der Zuschnitte 38..42 wird nachfolgend anhand des ausgebreiteten bzw. ausgefalteten Stapelaufbaus 12 (Fig. 6 und 7) näher beschrieben:
Zur Bildung jeder Teilsäule 35 und 36 dient der Zuschnitt 40 und ein Teil des Zuschnitts 39. Der Zuschnitt 40 ist dabei L-förmig abgewinkelt, während der Zuschnitt 39 über einen doppel-L- bzw. Z-förmigen Verlauf verfügt. Der L-förmige Zuschnitt 40 bildet zwei Wandungen 43, 44 der jeweiligen Teilsäule 35, 36, während zwei rechtwinklig zueinander verlaufende Schenkel jedes Zuschnitts 39 die beiden übrigen Wandungen 45 und 46 jeder Teilsäule 35, 36 bilden. An den freien Enden der die Wandungen 43 und 44 bildenden Schenkel des Zuschnitts 40 sind Verbindungslaschen 47 und 48 angeordnet, die die Wandungen 43 und 44 des Zuschnitts 40 mit den Wandungen 45 und 46 des Zuschnitts 39 verbinden. Ein dritter Schenkel des Zuschnitts 39 bildet eine Hälfte der Trennwand 29. Eine zweite Hälfte dieser Trennwand 29 ist gebildet durch eine diese vollständig überlappende und hieran befestigte Verbindungslasche 49 des L-förmig verlaufenden Zuschnitts 38. Der zweite rechtwinklig zur Verbindungslasche 49 jedes Zuschnitts 38 verlaufende Schenkel bildet jeweils eine Trennwand 32. Mit den in einer Ebene nebeneinanderliegenden Wandungen 45 der Teilsäulen 35 und 36 ist jeweils ein ebener Zuschnitt 41 verbunden, und zwar derart, daß jeder Zuschnitt 41 die entsprechende Wandung 45 der jeweiligen Teilsäule 35 bzw. 36 vollständig überlappt und darüber hinaus nach außen gegenüber den Teilsäulen 35, 36 hervorragt zur Bildung der Trennwände 30. Der Zuschnitt 42 ist U-förmig geformt. Zwei parallele Schenkel des Zuschnitts 42 bilden dadurch gleich große, parallele Trennwände 31. Ein die Trennwände 31 verbindender Steg 50 des Zuschnitts 42 entspricht der Breite der nebeneinanderliegenden Teilsäulen 35 und 36 und überlappt die hieran anliegenden Abschnitte der Zuschnitte 41. Mittig durch den Steg 50 des Zuschnitts 41 verläuft eine aufrechte Mittelscharnierachse 51. Diese ermöglicht ein Auseinanderklappen der Teilsäulen 35 und 36 im Bereich ihrer Ecken 37 und eine Halbierung der Gesamtfläche des zusammengelegten bzw. zusammengefalteten Stapelaufbaus 12.

Das Zusammenlegen des Stapelaufbaus 12 erfolgt durch ein Verschwenken einzelner Abschnitte der Zuschnitte 38, 39, 40 und 42 um ihre Scharnierachsen 33 bzw. die Mittelscharnierachse 51. Um dieses Verschwenken zu erleichtern und gezielt zu gestalten sind die Scharnierachsen 33 bzw. die Mittelscharnierachse 51 in den Zuschnitten 38 bis 40 und 42 durch Einprägungen oder dergleichen gebildet.

Das Zusammenfalten bzw. Zusammenlegen des Stapelaufbaus 12 erfolgt in folgender Weise (Fig. 6 und 7):
Nach dem Lösen des Stapelaufbaus 12 vom Sockel 11 werden die Z-förmig verlaufenden Zuschnitte 39 durch Ziehen an ihren freien Enden glattgelegt, nämlich von außen gegen die in der Faltfläche 34 liegenden und in ihrer Gestalt nicht veränderten Zuschnitte 41 gelegt. Gleichzeitig werden dabei die Zuschnitte 40 derart verformt, daß die Teilsäulen 35 und 36 flach sind. Anschließend werden die gegenüberliegenden Trennwände 32 der Zuschnitte 38 gegensinnig auseinandergeklappt, so daß ihre freien Kanten 52 voneinander weggerichtet sind. Ebenso werden die Trennwände 31 des Zuschnitts 42 gegensinnig voneinanderweg bewegt, so daß ihre freien Kanten 53 an gegenüberliegenden Außenseiten des zusammengelegten Stapelaufbaus 12 sich befinden. Hiernach wird der zusammengelegte Stapelaufbau 12 nochmals V-förmig um die Mittelscharnierachse 51 gefaltet zur Halbierung seiner Grundfläche. Durch entsprechende Bemessung der Zuschnitte 38 bis 42 des Stapelaufbaus 12 erhält dieser im zusammengefalteten bzw. zusammengelegten Zustand eine rechteckförmige Grundfläche, die dem lichten Innenmaß des Außenteils 13 des Sockels 11 entspricht, wodurch der zusammengefaltete Stapelaufbau 12 auf das Innenteil 14 des Sockels 11 legbar ist und in diesem dadurch formschlüssig aufgenommen wird. Danach können gegebenenfalls weitere zusammengelegte Verpackungsbehälter mit ihrem Sockel 11 auf die Stapelecken 18 des unteren Sockels 11 aufgesetzt werden. Auf diese Weise können mehrere leere und zusammengelegte Verpackungsbehälter raumsparend zurücktransportiert werden zur erneuten Befüllung.

Alternativ ist es denkbar, die Trennwände 29 bis 32 ohne Verbindungslaschen 47 bis 49 und ohne den Steg 50 direkt an die entsprechenden Ecken der Teilsäulen 35 und 36 anzulenken, beispielsweise durch eckseitig aufgeklebte Scharnierbänder zur Bildung der Scharnierachsen 33. In diesem Falle ist auch die Mittelscharnierachse 51 durch ein Scharnierband gebildet, das die Teilsäulen 35 und 36 an ihren zueinandergerichteten Ecken 37 unmittelbar miteinander verbindet.

Nach einem wesentlichen Aspekt der Erfindung ist der gesamte Verpackungsbehälter aus Kunststoff gebildet, und zwar vorzugsweise aus thermoplastischem Kunststoff. Dazu ist das Außenteil 13 des Sockels 11 vorzugsweise als Spritzgußteil ausgebildet. Das Innenteil 14 des Sockels 11 ist demgegenüber vorzugsweise durch Tiefziehen gebildet. Alternativ kann auch das Außenteil 13 als Tiefziehteil ausgebildet sein. Die Zuschnitte 39 bis 42 hingegen sind vorzugsweise aus einem bahnförmigen Kunststoff ausgeschnitten. Die Scharnierachsen 33 und die Mittelscharnierachse 51 sind durch Prägen hergestellt, so daß sie Filmscharniere bilden. Verbunden sind die Zuschnitte 39 bis 42 an ihren Verbindungslaschen 47 bis 49 durch Kleben, Schweißen oder dergleichen.

## Patentansprüche

1. Verpackungsbehälter zur Aufnahme einer Mehrzahl von Gegenständen, insbesondere Schokoladentafeln (10), mit einem Sockel (11) und einem mit dem Sockel (11) lösbar verbundenen Stapelaufbau (12), **dadurch gekennzeichnet,** daß der Stapelaufbau (12) zusammenlegbar und/oder zusammenfaltbar ausgebildet ist, derart, daß mehrere aufrechte Trennwände (29, 31, 32), die verschwenkbar an mindestens einer Säule (28) angeordnet sind, gegen eine von nicht verschwenkbar mit der oder jeden Säule (28) verbundenen Trennwänden (30) gebildete Ebene faltbar sind.

2. Verpackungsbehälter nach Anspruch 1, dadurch gekennzeichnet, daß der Stapelaufbau (12) derart zusammenlegbar und/oder -faltbar ist, daß er auf bzw. in den Sockel (11) legbar ist.

3. Verpackungsbehälter nach Anspruch 1 oder 2, dadurch gekennzeichnet, daß der Stapelaufbau (12) einstückig ausgebildet ist.

4. Verpackungsbehälter nach einem oder mehreren der Ansprüche 1 bis 3, dadurch gekennzeichnet, daß die mittlere Säule (28) als Hohlsäule ausgebildet ist, die sich vorzugsweise aus mindestens zwei nebeneinanderliegenden Teilsäulen (35, 36) zusammensetzt, wobei die nebeneinanderliegenden Teilsäulen (35, 36) insbesondere mittelbar oder unmittelbar miteinander verbunden sind.

5. Verpackungsbehälter nach einem oder mehreren der Ansprüche 4, dadurch gekennzeichnet, daß zwei in etwa einer Ebene hintereinanderliegende Seiten verschiedener Teilsäulen (35, 36) miteinander verbunden sind, insbesondere derart, daß die miteinander verbundenen Teilsäulen (35, 36) um eine zwischen ihren verbundenen Seiten liegende, aufrechte Schwenkachse, vorzugsweise eine Mittelscharnierachse (51), gegeneinander verschwenkbar sind.

6. Verpackungsbehälter nach Anspruch 4 oder 5, dadurch gekennzeichnet, dar die Teilsäulen (35, 36) zum Zusammenlegen bzw. Zusammenfalten des Stapelaufbaus (12) flachlegbar sind.

7. Verpackungsbehälter nach einem oder mehreren der Ansprüche 4 bis 6, dadurch gekennzeichnet, daß die Trennwände (29, 30, 31, 32) und die Teilsäulen (35, 36) des Stapelaufbaus (12) durch mehrere Zuschnitte (38, 39, 40, 41, 42) gebildet sind, die Verbindungslaschen (47, 48, 49) aufweisen zum Verbinden der Zuschnitte (38, 39, 40, 41, 42).

8. Verpackungsbehälter nach einem oder mehreren der Ansprüche 4 bis 7, dadurch gekennzeichnet, daß zwei in einer Ebene liegende Trennwände (30) zur Bildung einer Faltfläche (34) nicht faltbar sind und gegen diese Trennwände (30) die übrigen Trennwände (29, 31, 32) und die Teilsäulen (35, 36) faltbar sind, und zwar von gegenüberliegenden Seiten der Trennwände (30) aus.

9. Verpackrnngsbehälter nach einem oder mehreren der Ansprüche 1 bis 8, dadurch gekennzeichnet, daß ein Zuschnitt (42) eine Mittelscharnierachse (51) aufweist, um die der zusammengefaltete bzw. zusammengelegte Stapelaufbau (12) V-förmig zusammenfaltbar ist zur Halbierung seiner Grundfläche, wobei vorzugsweise der um die Mittelscharnierachse (51) V-förmig zusammengelegte bzw. zusammengefaltete Stapelaufbau (12) eine Grundfläche aufweist, die korrespondierend zur Grundfläche des Sockels (11) ausgebildet ist, insbesondere dem lichten Innenmaß des Sockels (11) entspricht zum Hineinlegen in den Sockel (11).

10. Verpackungsbehälter nach einem oder mehreren der Ansprüche 5 bis 9, dadurch gekennzeichnet, daß die Mittelscharnierachse (51) an einem Bereich angrenzt, der etwa zwischen den miteinander verbundenen Seitenflächen unterschiedlicher Teilsäulen (35, 36) liegt.

11. Verpackungsbehälter nach einem oder mehreren der Ansprüche 1 bis 10, dadurch gekennzeichnet, daß der Sockel (11) sich aus einem Außenteil (13) und wenigstens einem Innenteil (14) zusammensetzt, wobei vorzugsweise das Innenteil (14) einstückig ausgebildet und in das Außenteil (13) eingesetzt ist.

12. Verpackungsbehälter nach Anspruch 11, dadurch gekennzeichnet, daß das Innenteil (14) Auflager für die Gegenstände (10) aufweist, die zur Mitte des Innenteils (14) hin geneigt sind, und vorzugsweise das Auflager in mehrere Felder (23, 24, 25, 26) unterteilt ist, die jeweils zur Aufnahme eines oder mehrerer Stapel übereinanderliegender Gegenstände (10) ausgebildet sind.

13. Verpackungsbehälter nach Anspruch 12, dadurch gekennzeichnet, daß mindestens ein Feld (23, 24, 25, 26) mehrere Teilauflager (27) aufweist zur Aufnahme jeweils eines Stapels übereinanderliegender Gegenstände (10).

14. Verpackungsbehälter nach einem oder mehreren der Ansprüche 1 bis 13, dadurch gekennzeichnet, daß der Sockel (11) mit Vertiefungen versehen ist, die korrespondierend zum Grundriß des ausgefalteten Stapelaufbaus (12) ausgebildet sind, und zwar vorzugsweise derart, daß der Stapelaufbau (12) mit einem unteren Randabschnitt in die Vertiefungen im Sockel (11) einsteckbar ist, wobei vorzugsweise die Vertiefungen als im Innenteil (14) des Sockels (11) angeordnete Längsnuten (21) und Quernuten (22) ausgebildet sind.

15. Verpackungsbehälter nach Anspruch 14, dadurch gekennzeichnet, daß der Verlauf der Längsnuten (21) und Quernuten (22) im Innenteil (14) korrespondierend zum Grundriß des ausgefalteten Stapelaufbaus (12) ist und vorzugsweise zwischen den Längsnuten (21) einerseits und den Quernuten (22) andererseits die Felder (23, 24, 25, 26) des Innenteils (14) liegen.

16. Verpackungsbehälter nach einem oder mehreren der Ansprüche 1 bis 15, dadurch gekennzeichnet, daß der Sockel (11) Halteorgane zur zentrierten Aufnahme des zusammengelegten Stapelaufbaus (12) aufweist, wobei die Halteorgane vorzugsweise als Stapelecken (18) an eckseitigen oberen Rändern der Seitenwände (16) bzw. Querwände (17) des Außenteils (13) des Sockels (11) ausgebildet sind.

## Claims

1. Packaging container for receiving a plurality of articles, especially chocolate bars (10), with a base (11) and with a stacking structure (12) releasably connected to the base (11), characterized in that the stacking structure (12) is designed to be collapsible and/or capable of being folded up, in such a way that a plurality of vertical partitions (29, 31, 32) arranged pivotably on at least one column (28) can be folded towards a plane formed by partitions (30) not pivotably connected to the or each column (28).

2. Packaging container according to Claim 1, characterized in that the stacking structure (12) is collapsible and/or can be folded up, in such a way that it can be placed onto or into the base (11).

3. Packaging container according to Claim 1 or 2, characterized in that the stacking structure (12) is made in one piece.

4. Packaging container according to one or more of Claims 1 to 3, characterized in that the middle column (28) is designed as a hollow column which is preferably composed of at least two part columns (35, 36) located next to one another, the part columns (35, 36) located next to one another being connected to one another especially indirectly or directly.

5. Packaging container according to Claim 4, characterized in that two sides of different part columns (35, 36), the said sides being located one behind the other in approximately one plane, are connected to one another, especially in such a way that the part columns (35, 36) connected to one another are pivotable relative to one another about a vertical pivot axis, preferably a middle hinge axis (51), located between their connected sides.

6. Packaging container according to Claim 4 or 5, characterized in that the part columns (35, 36) can be laid flat in order to collapse or fold up the stacking structure (12).

7. Packaging container according to one or more of Claims 4 to 6, characterized in that the partitions (29, 30, 31, 32) and the part columns (35, 36) of the stacking structure (12) are formed by a plurality of blanks (38, 39, 40, 41, 42) which have connecting tabs (47, 48, 49) for the connection of the blanks (38, 39, 40, 41, 42).

8. Packaging container according to one or more of Claims 4 to 7, characterized in that two partitions (30) lying in one plane cannot be folded so as to form a folding surface (34) and the remaining partitions (29, 31, 32) and the part columns (35, 36) can be folded against these partitions (30), specifically from opposite sides of the partitions (30).

9. Packaging container according to one or more of Claims 1 to 8, characterized in that one blank (42) has a middle hinge axis (51), about which the folded-up or collapsed stacking structure (12) can be folded up in a V-shaped manner in order to halve its base area, preferably the stacking structure (12) collapsed or folded up in a V-shaped manner about the middle hinge axis (51) having a base area which is designed to correspond to the base area of the base (11), especially corresponds to the clear inner dimension of the base (11), in order to be placed into the base (11).

10. Packaging container according to one or more of Claims 5 to 9, characterized in that the middle hinge axis (51) is adjacent to a region which is located approximately between the interconnected side faces of different part columns (35, 36).

11. Packaging container according to one or more of Claims 1 to 10, characterized in that the base (11) is composed of an outer part (13) and of at least one inner part (14), preferably the inner part (14) being made in one piece and being inserted into the outer part (13).

12. Packaging container according to Claim 11, characterized in that the inner part (14) has supports for the articles (10), which supports are inclined towards the middle of the inner part (14), and preferably the support is subdivided into a plurality of zones (23, 24, 25, 26) which are each designed for receiving one or more stacks of articles (10) lying one on top of the other.

13. Packaging container according to Claim 12, characterized in that at least one zone (23, 24, 25, 26) has a plurality of part supports (27), each for receiving a stack of articles (10) lying one on top of the other.

14. Packaging container according to one or more of Claims 1 to 13, characterized in that the base (11) is provided with depressions which are designed to correspond to the base contour of the folded-out stacking structure (12), specifically, preferably in such a way that the stacking structure (12) can be inserted with a lower edge portion into the depressions in the base (11), preferably the depressions being designed as longitudinal grooves (21) and transverse grooves (22) arranged in the inner part (14) of the base (11).

15. Packaging container according to Claim 14, characterized in that the course of the longitudinal grooves (21) and transverse grooves (22) in the inner part (14) corresponds to the base contour of the folded-out stacking structure (12), and the zones (23, 24, 25, 26) of the inner part (14) are preferably located between the longitudinal grooves (21) on the one hand and the transverse grooves (22) on the other hand.

16. Packaging container according to one or more of Claims 1 to 15, characterized in that the base (11) has holding members for the centred reception of the collapsed stacking structure (12), the holding members being designed preferably as stacking corners (18) at upper corner edges of the side walls (16) or transverse walls (17) of the outer part (13) of the base (11).

## Revendications

1. Récipient d'emballage destiné à recevoir plusieurs objets, en particulier des tablettes (10) de chocolat, ayant un socle (11) et une structure (12) empilable reliée de manière amovible au socle (11), caractérisé en ce que la structure (12) empilable est conformée de manière à pouvoir être empilée et/ou repliée de telle sorte que plusieurs cloisons (29, 31, 32) verticales, qui sont disposées de manière pivotante sur au moins une colonne (28), peuvent être repliées contre un plan formé par des cloisons (30) reliées de manière non pivotante avec la colonne ou chacune des colonnes (28).

2. Récipient d'emballage selon la revendication 1, caractérisé en ce que la structure (12) empilable peut être empilée et/ou repliée de telle sorte qu'elle peut être placée sur ou encore dans le socle (11).

3. Récipient d'emballage selon la revendication 1 ou 2, caractérisé en ce que la structure (12) empilable est formée d'une seule pièce.

4. Récipient d'emballage selon une ou plusieurs des revendications 1 à 3, caractérisé en ce que la colonne (28) médiane est conformée comme une colonne creuse qui se compose de préférence d'au moins deux colonnes (35, 36) partielles contiguës, les colonnes (35, 36) partielles contiguës étant reliées entre elles, en particulier, de manière directe ou indirecte.

5. Récipient d'emballage selon la revendication 4, caractérisé en ce que deux côtés appartenant à des colonnes (35, 36) partielles différentes et placés l'un derrière l'autre à peu près dans un plan sont reliés entre eux, en particulier de telle manière que les colonnes (35, 36) partielles reliées entre elles puissent pivoter l'une par rapport à l'autre autour d'un pivot vertical se trouvant entre leurs côtés reliés, de préférence un axe (51) charnière médian.

6. Récipient d'emballage selon la revendication 4 ou 5, caractérisé en ce que les colonnes (35, 36) partielles peuvent être mises à plat pour empiler ou encore replier la structure (12) empilable.

7. Récipient d'emballage selon une ou plusieurs des revendications 4 à 6, caractérisé en ce que les cloisons (29, 30, 31, 32) et les colonnes (35, 36) partielles de la structure (12) empilable sont formées par plusieurs pièces découpées (38, 39, 40, 41, 42), qui présentent des languettes (47, 48, 49) de connexion destinées à relier les pièces découpées (38, 39, 40, 41, 42).

8. Récipient d'emballage selon une ou plusieurs des revendications 4 à 7, caractérisé en ce que deux cloisons (30) situées dans un plan pour former une surface (34) de pliage ne sont pas repliables et les cloisons (29, 31, 32) restantes et les colonnes (35, 36) partielles peuvent être repliées contre ces cloisons (30) et en fait à partir des côtés opposés des cloisons (30).

9. Récipient d'emballage selon une ou plusieurs des revendications 1 à 8, caractérisé en ce qu'une pièce découpée (42) présente un axe (51) charnière médian autour duquel la structure (12) empilable repliée ou encore empilée peut être repliée en forme de V pour réduire de moitié sa surface de base, la structure (12) empilable empilée ou encore repliée en forme de V autour de l'axe (51) charnière médian présentant de préférence une surface de base qui est conformée de manière correspondante à la surface de base du socle (11) et qui correspond, en particulier, à la dimension intérieure libre du socle (11) pour être placée dans le socle (11).

10. Récipient d'emballage selon une ou plusieurs des revendications 5 à 9, caractérisé en ce que l'axe (51) charnière médian est adjacent à une zone qui se trouve approximativement entre les surfaces latérales reliées entre elles de colonnes (35, 36) partielles distinctes.

11. Récipient d'emballage selon une ou plusieurs des revendications 1 à 10, caractérisé en ce que le socle (11) est composé d'une partie (13) extérieure et d'au moins une partie (14) intérieure, la partie (14) intérieure étant de préférence conformée en une pièce et insérée dans la partie (13) extérieure.

12. Récipient d'emballage selon la revendication 11, caractérisé en ce que la partie (14) intérieure présente des supports pour les objets (10), lesquels sont inclinés vers le milieu de la partie (14) intérieure et le support est de préférence divisé en plusieurs champs (23, 24, 25, 26) qui sont conformés respectivement pour recevoir une ou plusieurs piles d'objets (10) superposés.

13. Récipient d'emballage selon la revendication 12, caractérisé en ce qu'au moins un champ (23, 24, 25, 26) présente plusieurs supports (27) partiels pour recevoir respectivement une pile d'objets (10) superposés.

14. Récipient d'emballage selon une ou plusieurs des revendications 1 à 13, caractérisé en ce que le socle (11) est pourvu d'encoches qui sont conformées de manière à correspondre au plan horizontal de la structure (12) empilable dépliée et, en fait, de préférence de telle manière que la structure (12) empilable peut être enfoncée dans les encoches du socle (11) avec un segment de bord inférieur, les encoches étant de préférence conformées comme des rainures longitudinales (21) et des rainures transversales (22) dans la partie (14) intérieure du socle (11).

15. Récipient d'emballage selon la revendication 14, caractérisé en ce que l'étendue des rainures longitudinales (21) et des rainures transversales (22) dans la partie (14) intérieure correspond au plan horizontal de la structure (12) empilable dépliée et les champs (23, 24, 25, 26) de la partie (14) intérieure trouvent de préférence entre les rainures longitudinales (21) d'une part et les rainures transversales (22) d'autre part.

16. Récipient d'emballage selon une ou plusieurs des revendications 1 à 15, caractérisé en ce que le socle (11) présente des organes de retenue pour recevoir de manière centrée la structure (12) empilable empilée, les organes de retenue étant de préférence conformés comme des coins d'empilage (18) sur les bords supérieurs des coins de parois (16) latérales ou encore de parois (17) transversales de la partie (13) extérieure du socle (11).
